(19) **Europäisches Patentamt**
**European Patent Office**
**Office européen des brevets**

(11) **EP 4 475 537 A1**

(12) **EUROPEAN PATENT APPLICATION**
published in accordance with Art. 153(4) EPC

(43) Date of publication:
**11.12.2024 Bulletin 2024/50**

(21) Application number: **23746856.6**

(22) Date of filing: **20.01.2023**

(51) International Patent Classification (IPC):
**H04N 21/436** (2011.01)          **G09G 5/00** (2006.01)
**H04N 21/4402** (2011.01)

(52) Cooperative Patent Classification (CPC):
**G09G 5/00; H04N 21/436; H04N 21/4402**

(86) International application number:
**PCT/JP2023/001693**

(87) International publication number:
**WO 2023/145643 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.01.2022 JP 2022013446**

(71) Applicant: **Sony Interactive Entertainment Inc.**
**Tokyo 108-0075 (JP)**

(72) Inventors:
• **AIZAWA, Takahiro**
  **Tokyo 108-0075 (JP)**

• **AOKI, Sachiyo**
  **Tokyo 108-0075 (JP)**
• **YOKOTA, Kenichiro**
  **Tokyo 108-0075 (JP)**
• **YOSHIDA, Koichi**
  **Tokyo 108-0075 (JP)**
• **OGISO, Toru**
  **Tokyo 108-0075 (JP)**
• **HATASAWA, Yasunari**
  **Tokyo 108-0075 (JP)**

(74) Representative: **Müller Hoffmann & Partner**
**Patentanwälte mbB**
**St.-Martin-Straße 58**
**81541 München (DE)**

(54) **INFORMATION PROCESSING DEVICE, INFORMATION PROCESSING METHOD, AND PROGRAM**

(57)    Provided is an information processing apparatus which executes an application program to draw, according to a processing content of this application program, a frame image to be displayed on a screen of a display apparatus capable of updating the frame image at a variable refresh rate and determines a permissible rate range permitted as a refresh rate, according to an operation condition of the display apparatus assumed by the application program, to cause the display apparatus to execute refresh at a variable refresh rate within the determined permissible rate range.

FIG. 2

21 FRAME IMAGE DRAWING SECTION

FRAME IMAGE

ASSUMED OPERATION CONDITION INFORMATION

22 FRAME IMAGE TRANSMISSION SECTION

23 REFRESH RATE CONTROL SECTION

TO DISPLAY APPARATUS 14

**Description**

[Technical Field]

The present invention relates to an information processing apparatus, an information processing method, and a program which generate video to be displayed on a screen of a display apparatus.

[Background Art]

In general, a display apparatus such as a home television receiver displays video by continuously updating, at a predetermined cycle (refresh rate), a still image (frame image) to be displayed on a screen. Thus, an information processing apparatus which generates the video which the display apparatus is caused to display is required to draw each frame image forming the video, at a fixed frame rate matching this refresh rate. However, when the frame rate is fixed, there are such problems that a drawing capability of the information processing apparatus is not fully utilized, and, conversely, disorder in display such as stuttering and tearing occurs in a case in which the drawing capability of the information processing apparatus is insufficient.

Hence, in a video standard such as the HDMI (registered trademark), a technology called variable refresh rate (VRR) which variably changes the refresh rate of the display apparatus is proposed. With this technology, the display apparatus can update the display image at any refresh rate, and thus, the information processing apparatus dynamically changes the frame rate according to an own drawing speed and the like, to thereby be able to draw the frame image at a more desirable frame rate.

[Summary]

[Technical Problem]

There are various types of application programs which determine a content of the video which the display apparatus is caused to display, and there is, in these types, a type of application program which does not support the variable refresh rate described above and assumes display at a fixed refresh rate. As described above, depending on the type of the application program, the frame image is updated at a timing different from an assumed timing in a case in which the frame image is updated at the variable refresh rate, and hence, disfavored display such as unsmooth display of the video may be executed.

The present invention has been made in view of the actual situation described above, and one of objects thereof is to provide an information processing apparatus, an information processing method, and a program capable of executing more desirable display on a display apparatus which supports a variable refresh rate.

[Solution to Problem]

An information processing apparatus according to one aspect of the present invention is an information processing apparatus connected to a display apparatus capable of updating a frame image at a variable refresh rate, the information processing apparatus including a frame image drawing section that executes an application program to draw a frame image to be displayed on a screen of the display apparatus, according to a processing content of the application program, and a refresh rate control section that determines a permissible rate range permitted as a refresh rate, according to an operation condition of the display apparatus assumed by the application program, and causes the display apparatus to execute refresh at a variable refresh rate within the determined permissible rate range.

An information processing method according to one aspect of the present invention is an information processing method that controls a display apparatus capable of updating a frame image at a variable refresh rate, the information processing method including a step of executing an application program to draw a frame image to be displayed on a screen of the display apparatus, according to a processing content of the application program, and a step of determining a permissible rate range permitted as a refresh rate, according to an operation condition of the display apparatus assumed by the application program, and causing the display apparatus to execute refresh at a variable refresh rate within the determined permissible rate range.

A program according to one aspect of the present invention is a program that causes a computer connected to a display apparatus capable of updating a frame image at a variable refresh rate to execute a step of executing an application program to draw a frame image to be displayed on a screen of the display apparatus, according to a processing content of the application program, and a step of determining a permissible rate range permitted as a refresh rate, according to an operation condition of the display apparatus assumed by the application program, and causing the display apparatus to execute refresh at a variable refresh rate within the determined permissible rate range. This program may be stored in a computer-readable non-transitory information storage medium and may then be provided.

[Brief Description of Drawings]

[FIG. 1]

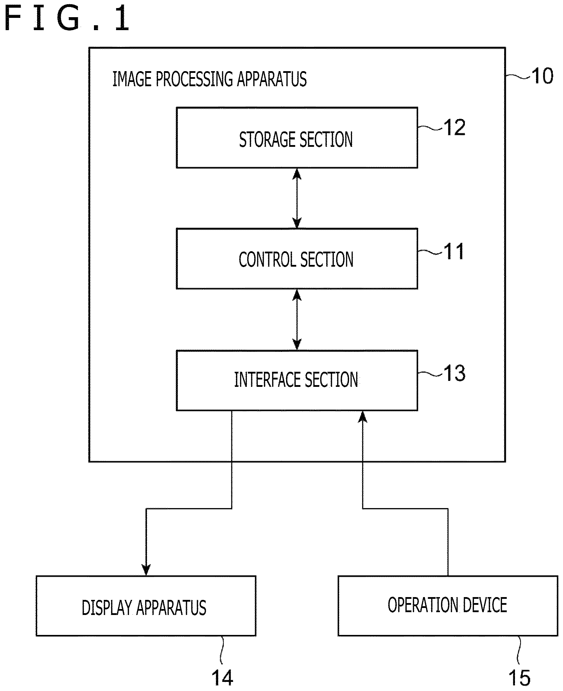

FIG. 1 is a configuration block diagram for illustrating a schematic configuration of an information processing apparatus according to an embodiment of the present invention.
[FIG. 2]

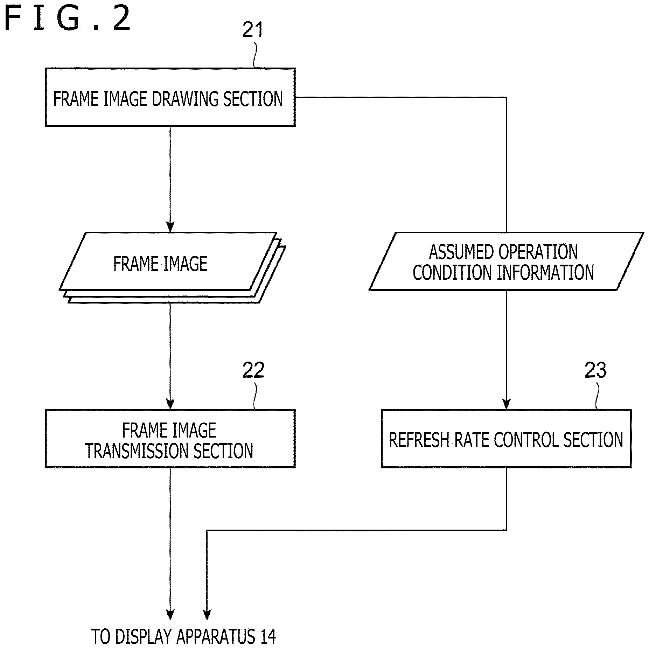

FIG. 2 is a functional block diagram for illustrating functions implemented by the information processing apparatus according to the embodiment of the present invention.
[FIG. 3]

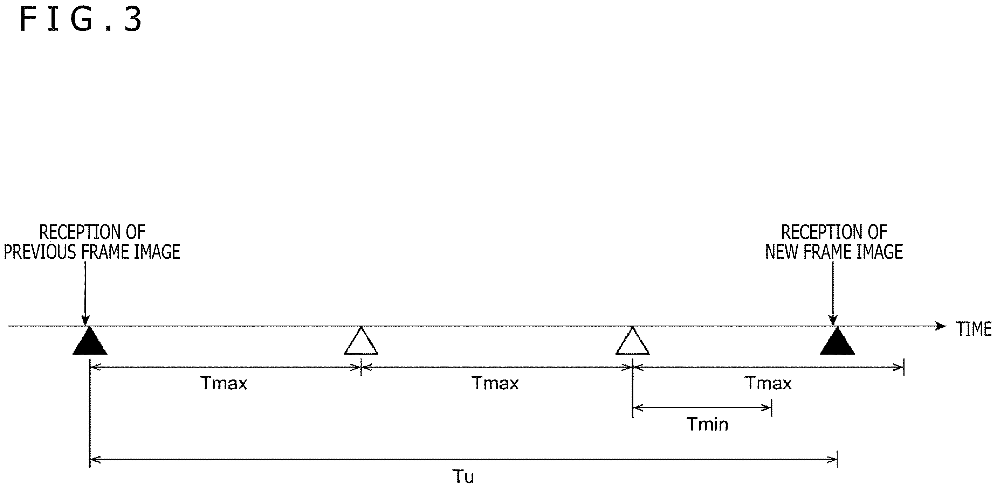

FIG. 3 is a diagram for illustrating an example of refresh rate control in a case of causing a frame image to be updated once in every N-th refresh.
[FIG. 4]

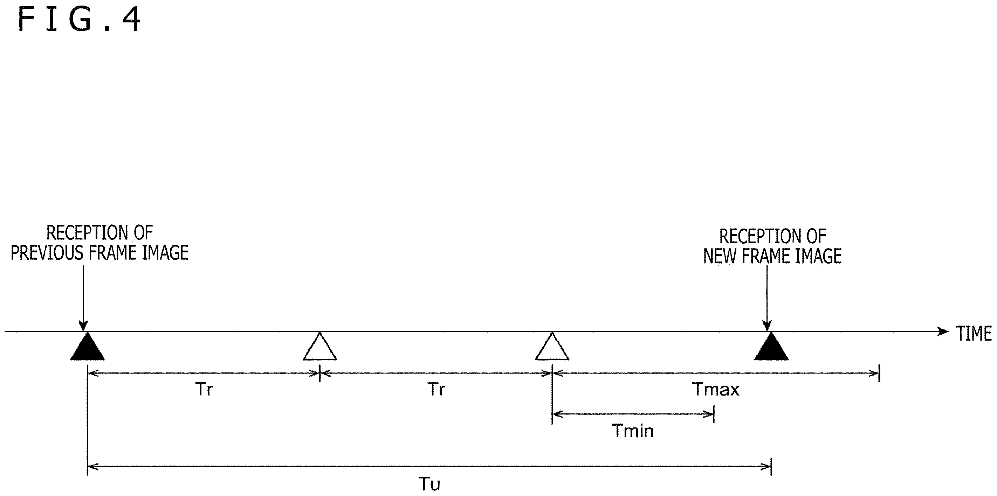

FIG. 4 is a diagram for illustrating another example of the refresh rate control in the case of causing the frame image to be updated once in every N-th refresh.

[Description of Embodiment]

A detailed description is now given of an embodiment of the present invention in reference to the drawings.

An information processing apparatus 10 according to an embodiment of the present invention is a home game machine, a personal computer, or the like, and includes a control section 11, a storage section 12, and an interface section 13 as illustrated in FIG. 1. Moreover, the information processing apparatus 10 is connected to a display apparatus 14 and an operation device 15 for enabling data communication.

The control section 11 includes at least one processor such as a central processing unit (CPU) and executes programs stored in the storage section 12, to execute various types of information processing. The control section 11 may include an arithmetic processing apparatus such as a graphics processing unit (GPU) dedicated for image processing. Note that, a specific example of processing executed by the control section 11 in the present embodiment is described later. The storage section 12 includes at least one memory device such as a random access memory (RAM) and stores the programs executed by the control section 11 and data processed by this program. Moreover, the storage section 12 includes a buffer memory which temporality stores a frame image described later.

The interface section 13 is an interface for the data communication between the display apparatus 14 and the operation device 15. The information processing apparatus 10 is wirelessly or wiredly connected to each of the display apparatus 14 and the operation device 15 via the interface section 13. Specifically, it is assumed that the interface section 13 includes a multimedia interface for transmitting, to the display apparatus 14, a video signal supplied by the information processing apparatus 10. In particular, in the present embodiment, it is assumed that the interface section 13 includes an interface such as HDMI which can transmit the video signal in compliance to a standard which supports a variable refresh rate. Moreover, the interface section 13 includes a data communication interface for receiving, from the operation device 15, an operation signal indicating a content of operation input performed by a user. Further, the interface section 13 may include a communication interface for transmitting and receiving data to and from another computer via a communication network such as the Internet.

The display apparatus 14 is a home television receiver, a monitor for a personal computer, or the like and displays video based on the video signal received from the information processing apparatus 10. In particular, in the present embodiment, it is assumed that the display apparatus 14 supports a variable refresh rate technology and executes refresh of an image displayed on a screen at a desired timing determined according to the video signal supplied by the information processing apparatus 10. In this configuration, the refresh refers to an operation of starting redisplay of the image to be displayed by the display apparatus 14 on the screen. The display apparatus 14 executes the refresh, thereby updating the frame image displayed on the screen to a new frame image received from the information processing apparatus 10 or redisplaying the frame image currently displayed. The display apparatus 14 executes this refresh at a desired timing and thereby becomes able to update the displayed frame image at the refresh rate which dynamically changes.

The operation device 15 is a device for receiving the operation input performed by the user of the information processing apparatus 10 and may be, for example, a controller for a home game machine, a keyboard, a mouse, or the like. The operation device 15 is provided with operation members such as buttons and a touch pad for receiving the operation input made by the user and transmits, to the information processing apparatus 10, the operation signal indicating a content of the operation input made by the user on this operation member.

A description is now given of functions implemented by the information processing apparatus 10 in the present embodiment by using a functional block diagram of FIG. 2. As illustrated in this diagram, the information processing apparatus 10 includes, in terms of function, a frame image drawing section 21, a frame image transmission section 22, and a refresh rate control section 23. These functions are implemented by the control section 11 executing one or a plurality of programs stored in the storage section 12. These programs may be supplied to the information processing apparatus 10 via a communication network such as the Internet or may be supplied to the information processing apparatus 10 while these programs are stored in an information recording medium such as an optical disc.

The frame image drawing section 21 determines a content of the frame image to be displayed on the screen of the display apparatus 14 and draws the content. It is assumed that the frame image drawing section 21 is implemented by the control section 11 executing an application program such as a game program. As an example, in a case in which processing for a game of a type of operating a character in a virtual space is executed, the frame image drawing section 21 determines positions and states of various objects to be disposed in the virtual space, a view point position, and the like and draws a frame image indicating a scene of this virtual space. Note that the drawing of the frame image and processing of a part thereof may be implemented by a program such as a graphic library, a game engine, or the like independent of the application program which determines the content of the frame image.

The frame image drawing section 21 continuously executes loop processing, thereby repetitively executing the drawing of the frame image described above. In this state, the display apparatus 14 supports the variable refresh rate as described before, and hence, the frame image drawing section 21 does not execute the drawing of the frame image every constant time and may execute the drawing of the frame image at any time interval.

However, of the application programs which determine the content of the frame image, there is a type of program which does not support the variable refresh rate and hence operates while assuming that the display apparatus updates the frame image at a fixed refresh rate. The application program that operates under this assumption is hereinafter referred to as a specific program. Moreover, a rate value of the fixed refresh rate assumed by the specific program is denoted as an assumed refresh rate value Rr. In a case in which a display apparatus which does not support the variable refresh rate and supports only the fixed refresh rate is connected, it is assumed that the frame image drawing section 21, which executes the specific program, draws the frame image every substantially constant time at a frame rate determined according to the assumed refresh rate value Rr.

Further, there is such a case that, of the specific programs, there is a specific program which assumes to cause the display apparatus to update the frame image at an update rate lower than the refresh rate and hence reduces a drawing frequency of the frame image to a value lower than the refresh rate of the display apparatus during the execution thereof. As an example, for example, there is such a case that the specific program assumes that the display apparatus displays a new frame image at a frequency of once in every second refresh while executing the refresh at a fixed refresh rate of 60 Hz. In this case, the specific program draws the new frame image at a frame rate of substantially 30 fps. With this method, while the display apparatus is operating at the fixed refresh rate of 60 Hz, the frame image drawing section 21 can draw the frame image at a lower frequency with a relatively long time margin. The value of the update rate of the frame image assumed by the specific program in this case is hereinafter denoted as an assumed update rate value Ru. Moreover, the number of times of the refresh assumed to be executed by the display apparatus until the frame image is updated once is denoted as an assumed number of times of refresh N. In the example described above, the assumed refresh rate value Rr of the display apparatus 14 is 60 Hz, and the assumed number of times of refresh N is 2; hence, the assumed update rate value Ru is 30 Hz (=60/2). In general, between the assumed refresh rate value Rr, the assumed update rate value Ru, and the assumed number of times of refresh N, the following relational formula is established.

$$Ru = Rr/N$$

Note that the specific program is not required to assume that the display apparatus always operates at the same assumed refresh rate value Rr and assumed number of times of refresh N during execution thereof and hence the specific program may assume to cause the display apparatus to execute the refresh control under an operation condition different from, for example, scene to scene as the processing progresses.

The frame image transmission section 22 sequentially transmits, to the display apparatus 14, the frame image drawn by the frame image drawing section 21. The processing result of the application program is presented to the user as video by the display apparatus 14 sequentially displaying, on the screen, the frame image transmitted by the frame image transmission section 22.

In this configuration, in a case in which the frame image drawing section 21 is implemented by the specific program, the frame image drawing section 21 draws the frame image at the frame rate corresponding to the assumed update rate value Ru as described before. The frame image transmission section 22 transmits a new frame image to the display apparatus 14 at the assumed update rate value Ru every substantially constant time to match a timing at which the frame image drawing section 21 draws the frame image.

The refresh rate control section 23 controls the refresh rate of the display apparatus 14. In particular, in the present embodiment, in the case in which the frame image drawing section 21 is implemented by the specific program, the refresh rate control section 23 controls the refresh rate of the display apparatus 14 such that the frame image is updated at the assumed update rate value Ru thereof or an update rate close thereto. This is because, when the frame image is updated at a timing deviated from the assumed update rate value Ru as a result of the display apparatus 14 updating the frame image at the variable refresh rate by any chance, there is a risk of occurrence of such problems that the video is reproduced at a speed different from the speed assumed by the specific program or a drop frame occurs.

Specifically, in a case in which the application program which implements the function of the frame image drawing section 21 is a specific program, the refresh rate control section 23 acquires information (herein referred to as assumed operation condition information) relating to an operation condition of the display apparatus assumed by this specific program. For example, in a case in which an assumed operation condition of the display apparatus changes for each scene or the like during the execution of the specific program, the specific program may specify a new assumed operation condition for the refresh rate control section 23 at a timing of the change in assumed operation condition. With this configuration, even when the assumed operation condition changes as the processing of the specific program progresses, the refresh rate control section 23 can always acquire the assumed operation condition information as of this timing. Moreover, in a case in which the assumed operation condition does not change during the execution of the specific program, the refresh rate control section 23 may acquire the assumed operation condition information by, for example, referring to a setting file stored in advance in the storage section 12 in association with this specific program.

The assumed operation condition information is required to include information capable of specifying at least the assumed update rate value Ru. Such information may be the value itself of the assumed update rate value Ru or a set of the values of the assumed refresh rate value Rr and the assumed number of times of refresh N. Note that default values may be set, in advance, for at least some of these parameters. With this configuration, even when the specific program does not assume the operation at the variable refresh rate and further does not have a function of specifying the assumed operation condition, the refresh rate control section 23 presumes that the specific program assumes the default assumed refresh rate value Rr and assumed number of times of refresh N, and can execute the control at a refresh rate corresponding to this value.

The refresh rate control section 23 uses the acquired assumed operation condition information to determine an actual operation condition of the display apparatus 14 and controls the refresh rate of the display apparatus 14 according to this operation condition. Specifically, the refresh rate control section 23 determines which of the fixed refresh rate and the variable refresh rate the display apparatus 14 is caused to operate at. Moreover, in a case in which the display apparatus 14 is caused to operate at the variable refresh rate, a range of values permitted as the refresh rate is determined, and the refresh at the variable refresh rate is caused to be executed in this range of values. This range of values permitted as the refresh rate is hereinafter referred to as a permissible rate range. The permissible rate range is defined by at least one of an upper limit value Rmax and a lower limit value Rmin of the value of the rate. The permissible rate range from the lower limit value Rmin to the upper limit value Rmax is hereinafter denoted as [Rmin, Rmax].

The refresh rate control section 23 can limit the time interval at which the display apparatus 14 executes the refresh, by setting the permissible rate range for the display apparatus 14. The time interval at which the display apparatus 14 executes the refresh is hereinafter referred to as a refresh interval, and a range of time permitted as the refresh interval corresponding to the permissible rate range is hereinafter referred to as a permissible refresh interval range. Moreover, a lower limit value of the refresh interval corresponding to the upper limit value Rmax of the permissible rate range is denoted as Tmin, and an upper limit value of the refresh interval corresponding to the lower limit value Rmin of the permissible rate range is denoted as Tmax.

Specifically, in the case in which the frame image is updated at the variable refresh rate, when a time equal to or longer than the lower limit value Tmin of the refresh interval has not elapsed since the previous refresh at a timing of the reception of a new frame image from the information processing apparatus 10, the display apparatus 14 waits until the time of the lower limit value Tmin elapses, executes the next refresh, and displays the new frame image. Moreover, in a case in which the time of the upper limit value Tmax of the refresh interval has elapsed since the previous refresh without the new frame image being received from the information processing apparatus 10, the display apparatus 14 executes the next refresh. In this refresh, the previous frame image is displayed again. Meanwhile, in a case in which a new frame image is received at a timing between the lower limit value Tmin and the upper limit value Tmax, the display apparatus 14 which operates at the variable refresh rate immediately executes the refresh and displays the received frame image. The refresh rate control section 23 sets an appropriate permissible rate range for the display apparatus 14 according to the assumed refresh rate value Rr, and can cause the display apparatus 14 to update the frame image at the assumed update rate value Ru of the specific program or an update rate close thereto while enjoying the advantage of the variable refresh rate.

A description is now given of a specific example of a method of determining, by the refresh rate control section 23, the operation condition of the display apparatus 14. First, a description is given of an example of control executed by the refresh rate control section 23 in a case in which it is assumed that the specific program updates the frame image at the assumed refresh rate value Rr, that is, in a case in which the assumed number of times of refresh N is 1 and hence the assumed update rate value Ru is equal to the assumed refresh rate value Rr.

It is assumed that the refresh rate control section 23 determines the permissible rate range such that the permissible rate range falls within a rate range of the variable refresh rate which the display apparatus 14 can support. In general, a display apparatus which supports the variable refresh rate has a function of notifying the connected information processing apparatus 10 of the rate range of the variable refresh rate which the display apparatus itself can support. Thus, the refresh rate control section 23 determines the permissible rate range such that the supportable rate range notified in advance by the connected display apparatus 14 is not exceeded.

Further, in a case in which the application program which implements the frame image drawing section 21 is a specific program, the refresh rate control section 23 determines the permissible rate range such that the permissible rate range includes the assumed refresh rate value Rr (in this example, equal to the assumed update rate value Ru) of this specific program. The specific program draws a new frame image at a frame rate corresponding to the assumed refresh rate value Rr, and hence, when the permissible rate range includes the assumed refresh rate value Rr, it is expected that the display apparatus 14 immediately execute the refresh in a case in which a new frame image is received, and update the frame image.

In this state, in a case in which the assumed refresh rate value Rr is not included in the rate range of the variable refresh rate which the display apparatus 14 can support, the refresh rate control section 23 may provide such control that the display apparatus 14 executes the refresh at the fixed frame rate. There is such a case that the display apparatus 14 can execute the refresh at the assumed refresh rate value Rr of the application program as a fixed refresh rate even in a case in which the assumed refresh rate value Rr is not included in the rate range of the supportable variable refresh rate. In this case, it is assumed that the refresh rate control section 23 instructs the display apparatus 14 to execute the display at the fixed refresh rate. As a result, the advantage of the variable refresh rate is not obtained, but the display apparatus 14 can display the video at the refresh rate originally assumed by the specific program.

As a specific example, a description is given of a case in which the permissible rate range of the variable refresh rate which the display apparatus 14 can support is 70 to 144 Hz. In this case, when the specific program having the assumed refresh rate value Rr of 120 Hz is to be executed, it is assumed that the refresh rate control section 23 sets [70 Hz, 144 Hz] as the permissible rate range or a permissible rate range which is narrower than this permissible rate range but includes 120 Hz. As a result, the display apparatus 14 can display the video at the assumed refresh rate value Rr or a refresh rate close thereto while enjoying the advantage of the variable refresh rate.

Meanwhile, in a case in which the assumed refresh rate value Rr of the specific program is 60 Hz, when the display apparatus 14 executes the refresh in the permissible rate range [70 Hz, 144 Hz], even for the longest refresh interval, the refresh interval is shorter than that corresponding to the assumed refresh rate value Rr, and hence, there is a risk that the video may be displayed such that the video is forwarded faster than the assumption of the specific program or the drawing of the frame image may be so slow that a drop frame occurs. Thus, the refresh rate control section 23 instructs the display apparatus 14 to execute the refresh at the fixed refresh rate of 60 Hz. As a result, the video can be displayed as the specific program assumes.

A description is now given of control executed by the refresh rate control section 23 in a case in which the assumed number of times of refresh N is equal to or large than 2, that is, in a case in which the specific program draws the frame image at the assumed update rate value Ru lower than the assumed refresh rate value Rr.

First, it is generally assumed that the refresh rate control section 23 controls the refresh rate of the display apparatus 14 such that the display apparatus 14 executes (N-1) times of the refresh without the accompanying update of the frame image after a previous update of the frame image and then executes the next frame image update when the N-th refresh is executed. Further, the refresh rate control section 23 sets the permissible rate range at least when the display apparatus 14 executes the N-th refresh, and thereby controls the frame image to be updated at the variable refresh rate. At this time, the refresh rate control section 23 determines the permissible rate range for the N-th refresh such that the permissible refresh interval range corresponding to the permissible rate range for the N-th refresh includes the assumed update timing of the frame image. As a result, the display apparatus 14 can update the frame image at the assumed update timing of the specific program or a timing close thereto.

Specifically, in a case of the assumed refresh rate value Rr and the assumed number of times of refresh N, the assumed update rate value Ru is Rr/N, and an assumed time interval (hereinafter referred to as an assumed update interval Tu) from the frame image update for the previous time to the frame image update for the next time corresponding to this assumed update rate value Ru is calculated as Tu = 1000/Ru (ms). In a case in which a permissible refresh interval range at the N-th refresh is denoted as [Tmin, Tmax] and a required time from the frame image update for the previous time to the (N-1)-th refresh is denoted as $T_{N-1}$, the refresh rate control section 23 determines a control content up to the (N-1)-th refresh rate and the permissible rate range at the time of the N-th refresh such that the following relational formula is satisfied.

$$T_{N-1} + Tmin \leq Tu \leq T_{N-1} + Tmax$$

Note that, it is required that Tmin < Tmax hold true, and hence, it is not required that two equalities in the relational formula described above be simultaneously satisfied.

When the relational formula described above is satisfied, timings up to the (N-1)-th refresh may be any timings. Thus, the refresh rate control section 23 may set the permissible rate range up to the (N-1)-th refresh, and thereby cause the refresh to be executed at a variable refresh rate or may cause the refresh to be executed at a fixed refresh rate. Moreover, it is not required to cause the refresh having the same control content to be executed up to the (N-1)-th time, and the refresh having a different control content may be executed each time. A description is now given of several specific examples of the control executed by the refresh rate control section 23 in order to cause the display apparatus 14 to execute the N times of refresh.

As a first example, a description is first given of a case in which the control content of the refresh rate is not changed and the frame image is caused to be updated every number of times of refresh which is the same as the assumed number of times of refresh N assumed by the specific program. In this example, the refresh rate control section 23 determines the permissible rate range such that the display apparatus 14 updates, after the execution of the (N-1) times of the refresh without the accompanying update of the frame image, the frame image at the time of the execution of the N-th refresh. After that, the refresh rate control section 23 controls the display apparatus 14 such that the display apparatus 14 is caused to execute the N times of the refresh at the variable refresh rate within this permissible rate range in such a manner that a timing of the reception of the new frame image is the timing at which the N-th refresh can be executed.

For the sake of description, a description is first given of a case in which the assumed number of times of refresh N is 2. In a case in which the permissible refresh interval range is limited to [Tmin, Tmax] by the permissible rate range being set, the display apparatus 14 executes the refresh at a timing at which a time of the upper limit value Tmax has elapsed since the previous refresh unless the new frame image has been received. After that, in a case in which the next frame image is received at a timing after the lower limit value Tmin has elapsed, the display apparatus 14 immediately executes the refresh at this time point and updates the frame image. Thus, when the update interval of the frame image corresponding to the assumed update rate value Ru is longer than (Tmin + Tmax) but shorter than 2Tmax, the display apparatus 14 can immediately display the received frame image.

As a specific example, in a case in which the assumed refresh rate value Rr of the specific program is 60 Hz and the assumed number of times of refresh N is 2, the assumed update rate value Ru is 30 Hz, and hence, the assumed update interval Tu corresponding to this assumed update rate value Ru is approximately 33.3 ms (=1000/30). In this configuration, the specific program draws the frame image at the frame rate of 30 fps, and the display apparatus 14 receives the new frame image every approximately 33.3 ms.

In this case, the refresh rate control section 23 determines the permissible rate range such that the permissible refresh interval range [Tmin, Tmax] satisfies the following relational formula.

$$\mathtt{Tmin\ +\ Tmax\ \leq\ Tu\ \leq\ 2Tmax}$$

The permissible rate range satisfying the relational formula described above can be determined by determining each of Tmin and Tmax as follows.

$$\mathtt{Tmax\ \geq\ Tu/2}$$

$$\mathtt{Tmin\ \leq\ Tu-Tmax}$$

As a result of this determination, the display apparatus 14 can continue to update the frame image at the assumed update interval Tu of the specific program or at a time interval close thereto while maintaining the variable refresh rate.

In more general, also in a case in which the specific program assumes that the display apparatus causes the frame image to be updated at a frequency of once in every N-th (N is integer 2 or more) refresh, the permissible rate range can be determined in a similar manner. Specifically, the refresh rate control section 23 determines the permissible rate ranges for the N times such that the update of the frame image does not occur up to the (N-1)-th refresh and the next frame image is received by the timing of the occurrence of the N-th refresh, to thereby be able to update the frame image at the update timing assumed by the specific program or at a timing close thereto. In this case, it is only required to determine the permissible rate range such that the assumed update interval Tu satisfies the following relational formula for the refresh interval range [Tmin, Tmax].

$$\mathtt{Tmin\ +\ (N\ -\ 1) \cdot Tmax\ \leq\ Tu\ \leq\ N \cdot Tmax}$$

As a result of this determination, the display apparatus 14 causes the refresh to be generated every time the upper limit value Tmax of the time interval is reached while the frame image is not being updated. Moreover, when the new frame image is received at a timing at which a time longer than the lower limit value Tmin but shorter than the upper limit value Tmax elapses after such refresh without the accompanying update of the frame image occurs (N-1) times, the display apparatus 14 executes the N-th refresh, and can immediately display the new frame image.

FIG. 3 is a diagram for depicting the content of the refresh rate control described above and illustrating an example of the refresh executed by the display apparatus 14 in a case in which the assumed number of times of refresh N is 3. In this diagram, a symbol △ denotes the refresh without the accompanying update of the frame image, and a symbol ▲ denotes the refresh with the accompanying update of the frame image. In the example of this diagram, each of first refresh and second refresh after the previous update of the frame image is executed at a timing at which the time Tmax has elapsed since the previous refresh. After that, the update of the frame image occurs at the timing at which a new frame image is received within the permissible refresh interval range [Tmin, Tmax].

A description is now given of a second example of the control method for the refresh rate in the case in which the frame image is updated once in every N-th time. In this second example, the refresh rate control section 23 changes the control content between the refresh up to the (N-1)-th time and the N-th refresh, which is different from the first example. Specifically, up to the (N-1)-th refresh, the refresh is caused to be executed at the fixed refresh rate of the assumed refresh rate value Rr, as assumed by the specific program. After that, for the N-th refresh, the refresh is caused to be executed at a variable refresh rate and within the permissible rate range including the assumed refresh rate value Rr.

As a specific example, in a case in which the specific program assumes 120 Hz as the assumed refresh rate value Rr and assumes that the frame image is updated at a frequency of once in every third refresh, the refresh rate control section 23 causes the refresh to be executed twice at the fixed refresh rate of 120 Hz after the previous frame image update is executed. After that, the refresh rate control section 23 sets the permissible rate range including 120 Hz, and causes the refresh to be executed at the variable refresh rate.

FIG. 4 is a diagram for depicting the content of the refresh rate control described above and each of the symbols △ and ▲ denotes the timing of the refresh as in FIG. 3. In a case in which the assumed refresh rate value Rr is 120 Hz, a refresh interval (in this configuration, referred to as an assumed refresh interval Tr) corresponding to this assumed refresh rate value Rr is approximately 8.3 ms (=1000/120). The refresh rate control section 23 causes the refresh to be executed 2 (= 3 - 1) times at this assumed refresh interval. After that, for the third refresh, the permissible rate range is set such that the permissible refresh interval range [Tmin, Tmax] includes the assumed refresh interval Tr. As a result, as in the first example, the frame image can be updated at the assumed update interval Tu or at a time interval close thereto at the frequency of once in every N-th refresh. In this second example, it is required to frequently switch the refresh rate of the display apparatus 14, which is different from the first example, but it is possible to cause the display apparatus 14 to execute the refresh at the assumed refresh rate value Rr of the specific program or a refresh rate close thereto.

Note that it is assumed that the display apparatus 14 is caused to execute the refresh from the previous frame image update until the occurrence of the (N-1)-th refresh under the same condition in any case of the first and second examples described above. However, as described before, the control by the refresh rate control section 23 is not limited to these examples, and the rate value of the fixed refresh rate or the permissible rate range for the variable refresh rate may be changed every occurrence of the refresh.

In this configuration, for example, in a case in which the refresh rate control section 23 sets the permissible rate range different for each of the (N-1) times of refresh and causes the refresh to be executed, it is assumed that the length of $T_{N-1}$ is a sum of the upper limit values of the permissible refresh interval ranges each corresponding to the permissible rate range set for each time of refresh. As long as the setting is made such that this sum satisfies the relational formula described above, the permissible rate ranges each set for each time of refresh may be ranges different from one another.

As described above, with the information processing apparatus 10 according to the present embodiment, in a case in which the display apparatus 14 supporting the variable refresh rate is caused to display the frame image drawn by the specific program, it is possible to cause the display apparatus 14 to update the frame image at the assumed update rate value of the specific program or at an update rate close thereto.

Note that the embodiment of the present invention is not limited to the embodiment described above. For example, any one of the values of the parameters such as the assumed refresh rate value Rr, the assumed number of times of refresh N, the assumed update rate value Ru, and the like in the description given above is simply exemplification, and hence, various values which the specific program and the display apparatus 14 can support may be employed.

[Reference Signs List]

10: Information processing apparatus
11: Control section
12: Storage section
13: Interface section
14: Display apparatus
15: Operation device

21: Frame image drawing section
22: Frame image transmission section
23: Refresh rate control section

**Claims**

1. An information processing apparatus connected to a display apparatus capable of updating a frame image at a variable refresh rate, the information processing apparatus comprising:

    a frame image drawing section that executes an application program to draw a frame image to be displayed on a screen of the display apparatus, according to a processing content of the application program; and
    a refresh rate control section that determines a permissible rate range permitted as a refresh rate, according to an operation condition of the display apparatus assumed by the application program, and causes the display apparatus to execute refresh at a variable refresh rate within the determined permissible rate range.

2. The information processing apparatus according to claim 1, wherein the refresh rate control section determines the permissible rate range such that an assumed refresh rate value assumed by the application program as a rate value in a case in which the display apparatus updates the frame image at a fixed refresh rate is included.

3. The information processing apparatus according to claim 2, wherein the refresh rate control section causes the display apparatus to execute the refresh at a fixed refresh rate in a case in which the assumed refresh rate value is not included in a rate range supported by the display apparatus using the variable refresh rate.

4. The information processing apparatus according to claim 1, wherein the refresh rate control section determines, in a case in which the application program assumes that the display apparatus updates the frame image at a frequency of once in an assumed number of times of refresh N (N is an integer equal to or more than 2) at a fixed refresh rate, according to an assumed refresh rate value assumed as a rate value of the fixed refresh rate and the assumed number of times of refresh, a control content of the refresh that the display apparatus is caused to execute.

5. The information processing apparatus according to claim 4, wherein the refresh rate control section determines the permissible rate range at a time of execution of an N-th refresh when the display apparatus executes the N-th refresh after execution of (N-1) times of the refresh without accompanying update of the frame image after a previous update of the frame image such that a time interval permitted according to the permissible rate range at the time of the execution of the N-th refresh includes an assumed update timing of the frame image determined according to the assumed refresh rate value and the assumed number of times of refresh and causes the display apparatus to execute the N-th refresh within the determined permissible rate range.

6. The information processing apparatus according to claim 5, wherein the refresh rate control section determines the permissible rate range such that the display apparatus updates the frame image at the time of the execution of the N-th refresh after the execution of the (N-1) times of the refresh without the accompanying update of the frame image and causes the display apparatus to execute the refresh at the variable refresh rate N times within the determined permissible rate range.

7. The information processing apparatus according to claim 5, wherein the refresh rate control section causes the display apparatus to execute the (N-1) times of the refresh at the fixed refresh rate having the assumed refresh rate value and then causes the display apparatus to execute the refresh at the variable refresh rate within the permissible rate range including the assumed refresh rate value.

8. An information processing method that controls a display apparatus capable of updating a frame image at a variable refresh rate, the information processing method comprising:

    a step of executing an application program to draw a frame image to be displayed on a screen of the display apparatus, according to a processing content of the application program; and
    a step of determining a permissible rate range permitted as a refresh rate, according to an operation condition of the display apparatus assumed by the application program, and causing the display apparatus to execute refresh at a variable refresh rate within the determined permissible rate range.

9. A program that causes a computer connected to a display apparatus capable of updating a frame image at a variable refresh rate to execute:

a step of executing an application program to draw a frame image to be displayed on a screen of the display apparatus, according to a processing content of this application program; and
a step of determining a permissible rate range permitted as a refresh rate, according to an operation condition of the display apparatus assumed by the application program, and causing the display apparatus to execute refresh at a variable refresh rate within the determined permissible rate range.

# FIG.1

IMAGE PROCESSING APPARATUS ~10

STORAGE SECTION ~12

CONTROL SECTION ~11

INTERFACE SECTION ~13

DISPLAY APPARATUS

14

OPERATION DEVICE

15

# F I G . 2

21

FRAME IMAGE DRAWING SECTION

FRAME IMAGE

ASSUMED OPERATION
CONDITION INFORMATION

22

FRAME IMAGE
TRANSMISSION SECTION

23

REFRESH RATE CONTROL SECTION

TO DISPLAY APPARATUS 14

# FIG.3

EP 4 475 537 A1

RECEPTION OF
PREVIOUS FRAME IMAGE

RECEPTION OF
NEW FRAME IMAGE

TIME

Tmax

Tmax

Tmax

Tmin

Tu

# FIG.4

RECEPTION OF
PREVIOUS FRAME IMAGE

RECEPTION OF
NEW FRAME IMAGE

TIME

Tr

Tr

Tmax

Tmin

Tu

EP 4 475 537 A1

## INTERNATIONAL SEARCH REPORT

International application No.

**PCT/JP2023/001693**

### A. CLASSIFICATION OF SUBJECT MATTER

*H04N 21/436*(2011.01)i; *G09G 5/00*(2006.01)i; *H04N 21/4402*(2011.01)i
FI: H04N21/436; G09G5/00 520V; H04N21/4402

According to International Patent Classification (IPC) or to both national classification and IPC

### B. FIELDS SEARCHED

Minimum documentation searched (classification system followed by classification symbols)

H04N21/436; G09G5/00; H04N21/4402

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2016-529534 A (MICROSOFT TECHNOLOGY LICENSING, LLC) 23 September 2016 (2016-09-23)<br>    paragraphs [0028]-[0033] | 1-9 |
| A | US 8542221 B1 (WYATT et al.) 24 September 2013 (2013-09-24)<br>    column 6, lines 4-20 | 1-9 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 March 2023** | **20 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

International application No.

**PCT/JP2023/001693**

| Patent document cited in search report | | | Publication date (day/month/year) | Patent family member(s) | | | Publication date (day/month/year) |
|---|---|---|---|---|---|---|---|
| JP | 2016-529534 | A | 23 September 2016 | US | 2014/0368519 | A1 | |
| | | | | paragraphs [0035]-[0040] | | | |
| | | | | WO | 2014/200534 | A1 | |
| | | | | EP | 3008578 | A1 | |
| | | | | CA | 2913513 | A1 | |
| | | | | AU | 2013392029 | A1 | |
| | | | | KR | 10-2016-0019896 | A | |
| | | | | CN | 105556459 | A | |
| | | | | MX | 2015017191 | A | |
| | | | | RU | 2015153197 | A | |
| | | | | BR | 112015030905 | A2 | |
| US | 8542221 | B1 | 24 September 2013 | (Family: none) | | | |

Form PCT/ISA/210 (patent family annex) (January 2015)